**Europäisches Patentamt**

**European Patent Office**

**Office européen des brevets**

(11) Veröffentlichungsnummer: **0 026 910**
**B1**

(12) **EUROPÄISCHE PATENTSCHRIFT**

(45) Veröffentlichungstag der Patentschrift:
04.01.84

(51) Int. Cl.³: **B 65 G 61/00**, B 65 G 57/081

(21) Anmeldenummer: **80105912.2**

(22) Anmeldetag: **30.09.80**

(54) Vorrichtung zum Stapeln und Entstapeln von profiliert ausgebildeten, plattenförmigen Gegenständen.

(30) Priorität: **03.10.79 DE 2940051**

(43) Veröffentlichungstag der Anmeldung:
**15.04.81 Patentblatt 81/15**

(45) Bekanntmachung des Hinweises auf die Patenterteilung:
**04.01.84 Patentblatt 84/1**

(84) Benannte Vertragsstaaten:
**AT CH GB LI NL**

(56) Entgegenhaltungen:
**DE - A - 2 407 272**
**DE - A - 2 742 867**
**DE - B - 2 329 850**
**DE - U - 7 734 710**
**DE - U - 7 738 615**
**US - A - 3 406 836**

(73) Patentinhaber: **Firma Paul Engeler, Am Steinkreuz 5, D-4401 Saerbeck (DE)**

(72) Erfinder: **Kordts, Hugo August, Ing.-grad., Johanniterstrasse 46, D-4430 Steinfurt (DE)**

(74) Vertreter: **Habbel, Hans-Georg, Dipl.-Ing., Postfach 3429 Am Kanonengraben 11, D-4400 Münster (DE)**

ACTORUM AG

Vorrichtung zum Stapeln und Entstapeln von profiliert ausgebildeten, plattenförmigen Gegenständen

Die Erfindung bezieht sich auf eine Vorrichtung zum Stapeln und Entstapeln von profiliert ausgebildeten, plattenförmigen Gegenständen, insbesondere Paletten mit einer Greifeinrichtung, die an einer Stützsäule höhenverstellbar und um wenigstens 90° um eine vertikal ausgerichtete Achse schwenkbar gelagert ist und zwei von einem Tragbalken in ihrem Abstand voneinander einstellbar getragene Greifarme aufweist.

Eine Einrichtung der vorstehend gekennzeichneten Art wird in dem DE-U-7 738 615 beschrieben. Bei dieser Einrichtung wird von der Stützsäule ein über eine Spurstange gesteuerter Schwenkarm eingesetzt, der an seinem der Stützsäule zugewandten Ende um eine vertikal ausgerichtete Achse schwenkbar ist, d.h. also in einer horizontalen Ebene verschwenkbar gelagert ist. An seinem der Stützsäule abgewandten Ende trägt der Schwenkarm zwei nach unten gerichtete Greifarme, die an ihrem untersten Ende je eine Greifklaue tragen, wovon eine Greifklaue die Eigenschaft besitzen soll, den von den beiden Greifarmen ergriffenen Gegenstand um 180° zu wenden.

Wenn mit dieser bekannten Einrichtung ein plattenförmiger Gegenstand durch die beiden Greifklauen festgelegt, von den beiden Greifarmen gehalten wird, ist eine Verschwenkung um 180° nur dann möglich, wenn die Greifarme eine Länge aufweisen, die grösser als die halbe Länge des ergriffenen Gegenstandes ist, so dass die bekannte Einrichtung in Abhängigkeit von den zu handhabenden Gegenständen jeweils an diese Gegenstände angepasst werden muss. Wenn die einzelnen Paletten verschachtelt abgelegt werden sollen, ist nicht nur jeweils ein Wenden der Palette erforderlich, sondern auch noch eine Verschiebung der Palette, was mit dem bekannten Gerät nur durch eine aufwendige Verschiebebewegung am Schwenkarm durchgeführt werden kann. Offensichtlich hat die Spurstange die Aufgabe, diese Verschiebebewegung durchzuführen.

Aufgrund der besonderen Ausbildung der Greifeinrichtung ist das Gerät störanfällig und erbringt keine hohen Leistungen.

Der Erfindung liegt die Aufgabe zugrunde, das bekannte Gerät so zu verbessern und zu vereinfachen, dass es kostengünstiger hergestellt werden kann, trotzdem die Möglichkeit gibt, die Paletten nicht einfach durch Aufeinanderlagern abzulegen, sondern die Paletten gleichzeitig zu verschieben, ohne dass dazu das Durchführen einer besonderen Bewegung erforderlich ist.

Diese Aufgabe wird erfindungsgemäss dadurch gelöst, dass der Tragbalken der Greifeinrichtung auf einer horizontalen Drehachse gelagert ist, unter deren Zwischenschaltung die Greifeinrichtung an der Stützsäule angeordnet ist, wobei die beiden Greifarme sich parallel zu der horizontalen Drehachse erstrecken.

Mit der erfindungsgemässen Vorrichtung wird also ein aussermittiges Ergreifen der plattenförmigen Gegenstände gegenüber der den Tragarm tragenden Drehachse ermöglicht, so dass in Abhängigkeit davon, ob der Tragarm mit dem ergriffenen Gegenstand um eine horizontale Achse gedreht wird oder nicht, gleichzeitig eine gewisse Verschiebung des einen Gegenstandes gegenüber dem anderen Gegenstand erreicht wird.

Wenigstens ein Greifarm ist gemäss der Erfindung mit einer Klemmeinrichtung zur Halterung der plattenförmigen Gegenstände ausgerüstet.

Die Greifarme sind unabhängig voneinander gegenüber der zentrisch am Tragbalken angeordneten Drehachse verstellbar, so dass jede beliebige seitliche Verschiebung möglich ist.

Die Arbeitsweise dieser Einrichtung ist derart, dass die über eine Fördervorrichtung in den Bereich der Greifeinrichtung geförderte Palette von der Greifeinrichtung aussermittig erfasst wird und dann durch Schwenken um die Stützsäule um 90° versetzt und abgelegt wird. Die Greifeinrichtung schwenkt dann zurück und ergreift die nächste in ihren Arbeitsbereich transportierte Palette und wird nunmehr um die horizontale Drehachse um 180° gedreht, so dass dadurch die von der Greifeinrichtung ergriffene Palette auf dem Kopf stehend gegenüber der ersten Palette abgelegt werden kann. Da durch die aussermittige Anordnung der Greifarme gleichzeitig bei der Drehbewegung eine Versetzung erfolgt, ist es nunmehr möglich, die einzelnen Profilierungen ineinandergeschachtelt abzulegen, so dass dadurch das erwünschte verschachtelte und raumsparende Ablegen erreicht wird.

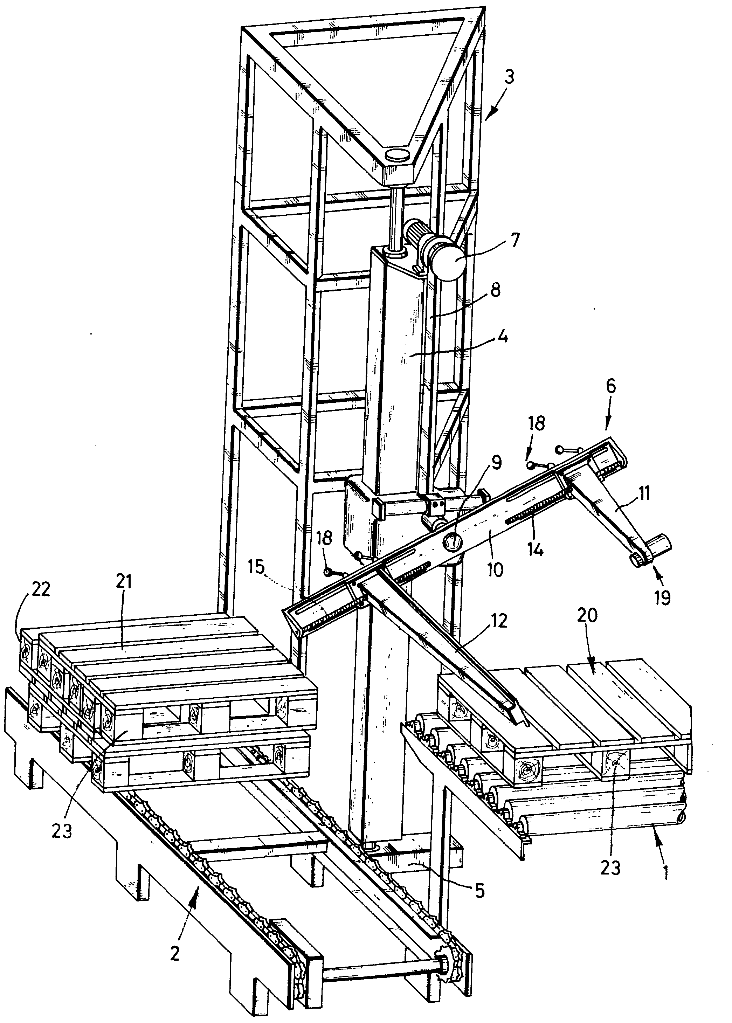

Ein Ausführungsbeispiel der Erfindung wird nachfolgend anhand der Zeichnung erläutert.

In der Zeichnung ist mit 1 eine Fördervorrichtung bezeichnet, über die die Paletten 20 der Vorrichtung zum Stapeln und Entstapeln zugeführt werden, wobei eine weitere Fördereinrichtung mit 2 bezeichnet ist. Die Paletten 20 sollen bei dem dargestellten Ausführungsbeispiel auf die zweite Fördereinrichtung 2 abgelegt werden.

Im Bereich der beiden Fördereinrichtungen 1 und 2 ist ein Traggestell 3 angeordnet, das eine Stützsäule 4 trägt, die schwenkbar gelagert ist, wobei in dem bei 5 erkennbaren Fuss ein kleiner Hubzylinder angeordnet ist, der über eine Zahnstange auf ein Zahnrad wirkt und damit die Stützsäule 4 dreht. An der Stützsäule 4 fest angeordnet ist die eigentliche Greifeinrichtung 6, die höhenverstellbar von der Stützsäule 4 dadurch getragen wird, dass an einem Motor 7 eine Zugeinrichtung 8 angreift, die nunmehr ein Verstellen der Greifeinrichtung 6 in der Höhenlage ermöglicht, wobei die Abwärtsbewegung durch das Gewicht der Greifeinrichtung allein bewirkt werden kann.

Die Greifeinrichtung 6 ist an der Stützsäule 4 unter Zwischenschaltung einer Drehachse 9 angeordnet, wobei die Drehachse 9 in einer horizontalen Ebene liegt und damit eine Verschwenkbewegung der Greifeinrichtung ermöglicht.

Die Greifeinrichtung selbst besteht aus einem Tragbalken 10, an dem Greifarme 11 und 12 angeordnet sind, und zwar gegenüber der Drehachse 9 aussermittig verstellbar, wobei die Verstellung durch die Zahnstangen 14 bzw. 15 und die Stellhebel 18 verdeutlicht werden soll.

Am vorderen Ende des Greifarmes 11 ist eine Klemmeinrichtung 19 dargestellt, die beispielsweise aus einem kleinen Pneumatikkolben bestehen kann und die es ermöglicht, dass die mit 20 bezeichnete Palette von den beiden Greifarmen 11 und 12 ergriffen und festgehalten wird. Die abgelegten Paletten sind in der Zeichnung mit 21 bzw. 22 bezeichnet, wobei deutlich erkennbar ist, dass die Palette 21 gegenüber der Palette 22 um das Mass der Stützstreben, die allgemein mit 23 bezeichnet sind, versetzt ist.

Die Arbeitsweise der erfindungsgemässen Einrichtung ist derart, dass von der Greifeinrichtung 6 durch Festklemmen einer Palette 20 durch die Arme 11 und 12 die Palette festgehalten wird.

Je nachdem, ob nun die Greifeinrichtung 6 um die Achse 9 gedreht wird oder nicht, gelangt die Palette in die «auf dem Kopf stehende» Stellung oder bleibt in der in der Zeichnung dargestellten Stellung, wobei, wenn die Palette auf den Kopf gedreht wird, eine aussermittige Versetzung erfolgt, da aus der Zeichnung deutlich erkennbar ist, dass der Abstand des Greifarmes 11 von der Drehachse 9 grösser als der Abstand des Greifarmes 12 von der Drehachse 9 ist.

Hierdurch wird das erstrebte und gewünschte verschachtelte Ablegen der Paletten 21 und 22 erreicht.

**Patentansprüche**

1. Vorrichtung zum Stapeln und Entstapeln von profiliert ausgebildeten, plattenförmigen Gegenständen, insbesondere Paletten (20, 21, 22) mit einer Greifeinrichtung (6), die an einer Stützsäule (4) höhenverstellbar und um wenigstens 90° um eine vertikal ausgerichtete Achse schwenkbar gelagert ist und zwei von einem Tragbalken (10) in ihrem Abstand voneinander einstellbar getragene Greifarme (11, 12) aufweist, dadurch gekennzeichnet, dass der Tragbalken (10) der Greifeinrichtung (6) auf einer horizontalen Drehachse (9) gelagert ist, unter deren Zwischenschaltung die Greifeinrichtung (6) an der Stützsäule (4) angeordnet ist, wobei die beiden Greifarme (11, 12) sich parallel zu der horizontalen Drehachse (9) erstrecken.

2. Vorrichtung nach Anspruch 1, dadurch gekennzeichnet, dass wenigstens ein Greifarm (11) mit einer Klemmeinrichtung (19) zur Halterung der plattenförmigen Gegenstände (20, 21, 22) ausgerüstet ist.

3. Vorrichtung nach Anspruch 1 und 2, dadurch gekennzeichnet, dass die Greifarme (11, 12) unabhängig voneinander gegenüber der zentrisch am Tragbalken (10) angeordneten Drehachse (9) verstellbar sind.

**Claims**

1. Apparatus for the stacking and destacking of profiled plate-like objects, more particularly pallets (20, 21, 22), with a gripping device (6) which is mounted to be slewable through at least 90° about a vertically aligned axis and to be vertically adjustable on a supporting column (4), and which comprises two gripping arms (11, 12) supported by a supporting beam (10) in such a manner that their spacing apart is adjustable, characterised in that the supporting beam (10) of the gripping device (6) is mounted on a horizontal pivot (9) by means of which the gripping device (6) is arranged on the supporting column (4), and the two gripping arms (11, 12) extend parallel to the horizontal pivot (9).

2. Apparatus according to claim 1, characterised in that at least one gripping arm (11) is provided with a clamping device (19) for holding the plate-like objects (20, 21, 22).

3. Apparatus according to claims 1 and 2, characterised in that the gripping arms (11, 12) are adjustable independently of one another relatively to the pivot (9), which is situated centrally on the supporting beam (10).

**Revendications**

1. Dispositif pour empiler et désempiler des objets profilés en forme de plaque, en particulier des palettes (20, 21, 22) à l'aide d'un dispositif de prise (6), lequel est réglable en hauteur contre un poteau de soutènement (4) et est logé de façon à pouvoir pivoter sur au moins 90° autour d'un axe dirigé verticalement et qui présente deux bras preneurs (11, 12) supportés, à une distance réciproque réglable, par une poutre (10), caractérisé en ce que la poutre (10) du dispositif de prise (6) est logée sur un axe de rotation horizontal (9) par l'intermédiaire duquel le dispositif de prise (6) est placé contre le poteau de soutènement (4), les deux bras preneurs (11, 12) s'étendant parallèlement à l'axe de rotation horizontal (9).

2. Dispositif selon la revendication 1, caractérisé en ce qu'au moins un bras preneur (11) est équipé d'un dispositif de serrage (19) pour tenir les objets en forme de plaque (20, 21, 22).

3. Dispositif selon l'une des revendications 1 ou 2, caractérisé en ce que les bras preneurs (11, 12) sont réglables, indépendamment l'un de l'autre, par rapport à l'axe de rotation (9) disposé d'une manière centrée par rapport à la poutre (10).